Europäisches Patentamt

European Patent Office

Office européen des brevets

(19)

(11) Publication number: **0 065 398**
**A1**

# EUROPEAN PATENT APPLICATION

(12)

(21) Application number: 82302351.0

(22) Date of filing: 07.05.82

(51) Int. Cl.³: **B 60 P 3/34**

(30) Priority: 07.05.81 ZA 813036
02.02.82 ZA 820655

(43) Date of publication of application: 24.11.82
Bulletin 82/47

(84) Designated Contracting States: **DE FR GB IT NL**

(71) Applicant: van der Westhuizen, Johannes Gysbertus
Deon, 107 Rose Avenue, Rothdene 1964 Taransvaal (ZA)

(72) Inventor: Cronje, Daniel Christiaan, 36 Hoogenhout
Street, Klipriviersdorp Transvaal (ZA)

(74) Representative: Smith, Philip Antony et al, REDDIE &
GROSE 16 Theobalds Road, London WC1X 8PL (GB)

(54) Constructions including planarly movable panel.

(57) Construction including planarly movable panel for example an extensible caravan including a first shell (2) and second and third shells (4) and (5) including end wall panels (4a, 5a, 4b and 5b) guided for telescopic movement relative to the first shell (2) by a guide arrangement including chain lengths (16a and 16b) secured to the panels (4a, 4b, 5a and 5b) and a rotating member (10) constituted by a pair of sprocket wheels (13) drivingly interconnected by means of a drawn tube 14. The rotating member (10) is mounted for rotation on the main shell (2) so that the sprocket wheels (13) are in meshing interengagement with the chains (16a and 16b).

The guide arrangements serve to guide the telescopic shells while being moved and hold the free ends of the shells against tipping under the influence of gravity.

EP 0 065 398 A1

CONSTRUCTIONS INCLUDING PLANARLY MOVABLE PANEL

**THIS INVENTION** relates to constructions which include a support and a panel associated with the support for movement in its own plane relative to the support. In a particular form of the invention it relates to a shelter construction, for example a mobile shelter such as a caravan, which includes a support in the form of a first shell and a second shell constituted by two or more panels which second shell is arranged to be moved in telescopic fashion relative to the main shell.

In designing a construction which includes one or more panel elements which are arranged to be moved in their own planes relative to a support structure care must be taken to provide an adequate guide arrangement to prevent jamming of the element when being moved. The tendency for jamming is particularly noticeable in constructions including relatively heavy and bulky compartments which are designed for a travel substantially equal to their own lengths relative to a support arrangement between a first position in which the compartments are located within the support arrangement and a second position in which the compartments extend from the support arrangement. Typical examples of such constructions are drawer cabinets and laterally extensible caravan constructions.

South African Patents Nos. 73/1931, 77/2700 and 79/5955 disclose caravan constructions of the type in question.

In South African Patent No. 73/1931 there is disclosed a caravan which includes a first shell which is mounted on a wheeled chassis and a second shell arranged to telescope relative to the first shell.

The first shell includes in the floor zone thereof a number of telescopic rails which are in use telescoped out and thereafter the second shell is pulled out on rollers associated therewith which rollers engage with the rails. In extended position the second shell is thus supported on these rails.

Both South African Patents 77/2700 and 79/5955 disclose a caravan construction including a fixed shell and an extending shell. The extending shell includes two rollers, one above the other on either side of the centre line of the shell and four anchor formations on the fixed shell. An endless cable element extends about the four anchors and the four rollers.

As the total length of the cable remains constant and is not dependent on the position of the extending part relative to the fixed shell, the patentee claims that the pulling forces which maintain equilibrium with the force of gravity operating on the extending part, or which produce a moment which counteracts tilting moment of the extending part, are easily controlled and the arrangement provides for a precise lateral guiding of the extending part relative to the main part.

It is an object of the invention to provide a construction of the type in question which is characterised in a reliable, accurate and easily operable guide arrangement which it is believed has many advantages over known constructions.

According to the invention a construction comprising a support and a panel associated with the support for movement in its own plane relative to the support is characterised in that the construction includes a guide arrangement including one or more gear sets, each set comprising a linear gear and a meshing circular gear, the linear gears being mounted in spaced parallel relationship to either one of the panel or support to extend in the direction of relative movement between the panel and the support, and the circular gears being mounted for rotation to the other of the panel or support to be in meshing interengagement with the linear gears and the circular gears being drivingly interconnected to restrain the linear gears to movement only in co-directional unison with one another relative to the circular gears.

In a particular form of the invention there is provided a shelter construction comprising a first shell and a second shell arranged for telescopic movement through an opening in a side of the first shell between a first position in which the second shell is located in the first shell and a second position in which it projects from the first shell, the second shell including a pair of opposed panels constituting end walls which lie in a plane parallel to the direction of telescopic movement and a side wall interconnecting the end walls, which is characterised in that the construction includes at least at one of the end walls a guide arrangement including two or more gear sets, each gear set comprising a linear gear and a circular gear, the linear gears being mounted in spaced parallel relationship to either one of the first shell or the end wall panel of the second shell to extend in the direction of telescopic movement between the shells, and

- 4 - 0065398

the circular gears being mounted for rotation to the other of the first shell or the end wall panel of the second shell to be in meshing interengagement with the linear gears, and the circular gears being drivingly interconnected to restrain the linear gears to movement only in co-directional unison with one another relative to the circular gears.

In a specific form of the invention there is provided a caravan by having the first shell of the shelter outlined above mounted on a wheel mounted chassis.

The gear set may comprise rack and pinion or preferably sprocket and chain arrangements.

In a preferred embodiment of the invention the bending axes of the chains are disposed in a plane parallel to the plane in which the panel is movable and the sprocket wheels are drivingly interconnected by means of a shaft to be co-axially disposed in spaced parallel planes normal to the plane in which the panel is movable.

The chains are preferably mounted on a mounting strip of resilient material to enable the chain to be in contact with more teeth formations of the sprocket than would be the case if it was rigidly mounted.

Preferably the linear gears are mounted on the panel.

The linear gears may also be mounted on the support or first shell as the case may be and the circular gears on the panel or end wall panel of a shell moveable relative to the support or first shell. It will be seen that in such arrangement the linear gears do not move in a true sense since they are mounted on the stationary member. It will be appreciated that linear gears do however move relative to the circular gears when the circular gears proceed along the linear gears.

In a shelter construction it is preferred to have both opposing end wall panels provided with gear sets.

The construction may further include floor structures in both the first and second shells and at least two gear sets associated with the floor structures, each gear set comprising a circular gear and a linear gear, the linear gears being mounted in spaced parallel relationship to one of the floor structures to extend in the direction of movement of the shells relative to one another, and the circular gears being mounted for rotation to the other floor structure to be in meshing interengagement with the linear gears, and the circular gears being drivingly interconnected to restrain the linear gears to movement only in co-directional unison with one another relative to the circular gears.

Although the term panel normally means a solid flat planar element it is intended that it shall also include a frame structure having openings therethrough. Furthermore, the expressions planar and planes are intended to include flat and curved planes.

For a clear understanding of the present invention a preferred embodiment thereof will now be described with reference to the accompanying drawings without thereby limiting the scope of the invention.

In the accompanying drawings

Figure 1      is a partly broken away perspective view of a caravan according to the invention in extended condition

Figure 2      is a section through the caravan of Figure 1 on line II-II

Figure 3      is a sectional plan view of the caravan of Figure 1 with the roof structures removed.

The drawings show a caravan comprising a first shell 2 mounted on a wheel mounted chassis (not shown) fitted with a draw bar 3, and second and third shells 4 and 5.

The second and third shells 4 and 5 extend from the first shell 2 through large openings provided in the side walls 6 and 7 of the first or main shell 2.

The main shell includes a roof supporting framework 8 and a floor supporting framework 9 which are both of substantially rectangular shape.  The floor supporting framework 9 may be constituted by square tubing welded together and the roof supporting framework 8 may be constituted by timber lengths bolted together.  Both frameworks 8 and 9 include longitudinal and transverse reinforcing rib structures which, for the purpose of clarity of the drawing, are not shown.

An elongated rotating element 10 is provided at each of the corner zones of the frameworks 8 and 9.

Each element 10 is mounted for rotation by means of upper and lower bearing blocks 11 and 12 secured respectively to the roof and floor supporting frameworks 8 and 9.

Each rotating element 10 comprises a pair of sprocket wheels 13 which are interconnected by means of a length of hollow drawn tubing 14 and includes spigot formations 15 by which it is connected to the bearing blocks 11 and 12.

Each of the opposing end walls 4a, 4b, 5a and 5b of the shells 4 and 5 are provided with a pair of chain lengths 16a and 16b mounted parallel to one another and parallel to the floor 17 of the shell to which it is mounted. The spacing between the chains 16a and 16b and the location of the rotating element 10 are such that the chains 16a and 16b are in meshing interengagement with the sprocket wheels 13.

As the sprocket wheels 13 are drivingly interconnected each pair of chains 16a and 16b mounted on end walls 4a, 4b, 5a or 5b is restrained to move only in co-directional unison with one another relative to the rotating element 10. It will be understood that for the free end of a shell to drop under the influence of gravity, the upper chain length 16a must move a greater distance relative to the rotating member 10 than the chain length 16b, that is, the upper sprocket wheel 13 must turn through a greater arc than the lower sprocket wheel. Since the sprockets are interconnected the free end of the shell is held against such dropping and the shell is accurately guided in the vertical plane when moved into or out of the first shell 2.

A similar guide arrangement is also provided for guiding the shells 5 and 6 in horizontal plane. Two chain lengths 18 are mounted on the outer surface of the floors of shells 5 and 6 and a rotating element 19 of the same construction as the rotating element described above is mounted in similar fashion to the frame 9 so that the chains 18 are in meshing interengagement with the sprocket wheels of the rotating element 19.

The chains 16a, 16b and 18 are preferably mounted in recesses provided in the end walls or floor to which they are mounted and a cover strip adapted to be moved by the sprocket wheels may extend over the recesses to cover the chains and protect it against the elements.

The chains are mounted on a rubber backing strip (not shown) to allow the chain to partially wrap around the sprocket wheel to engage more teeth of the sprocket wheel than would be the case if the chains are rigidly mounted in true linear fashion.

The side walls 4c and 5c of the shells 4 and 5 are provided with peripheral flange formations 4d and 5d respectively which flange formations are provided with rubber sealing strips (not shown) which in the collapsed condition of the caravan engage sealingly with the side walls 6 and 7 of the main shell 2.

The inner ends of the shells 4 and 5 are also provided with outwardly directed flange formations 4e and 5e respectively. These flange formations 4e and 5e are also provided with rubber sealing strips (not shown). The shell 2 is provided with ridge formations 6b and 7b spaced inwardly from the side walls 6 and 7 and arranged so that in use the sealing strips on the flange formations 4e and 5e are in sealing contact with the ridge formations 6b and 7b respectively when the two shells 4 and 5 are in fully extended position. If required the side walls 6 and 7 and the ridge formations 6b and 7b may also be provided with rubber sealing strips over their surfaces which abut with the flanges 4d and 5d or 4e and 5e respectively.

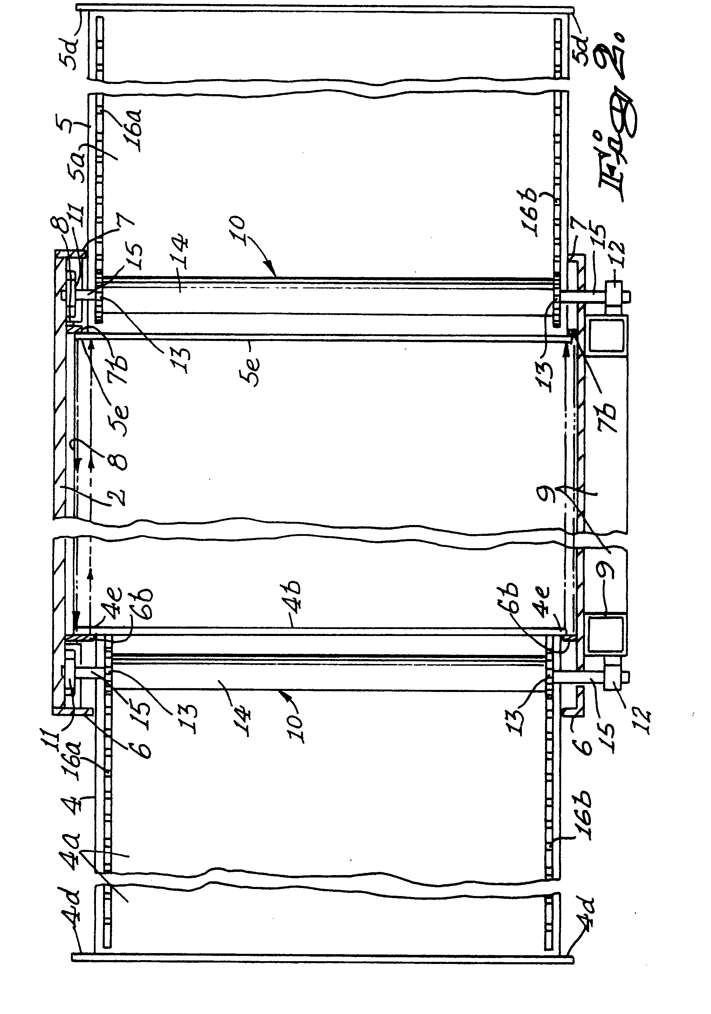

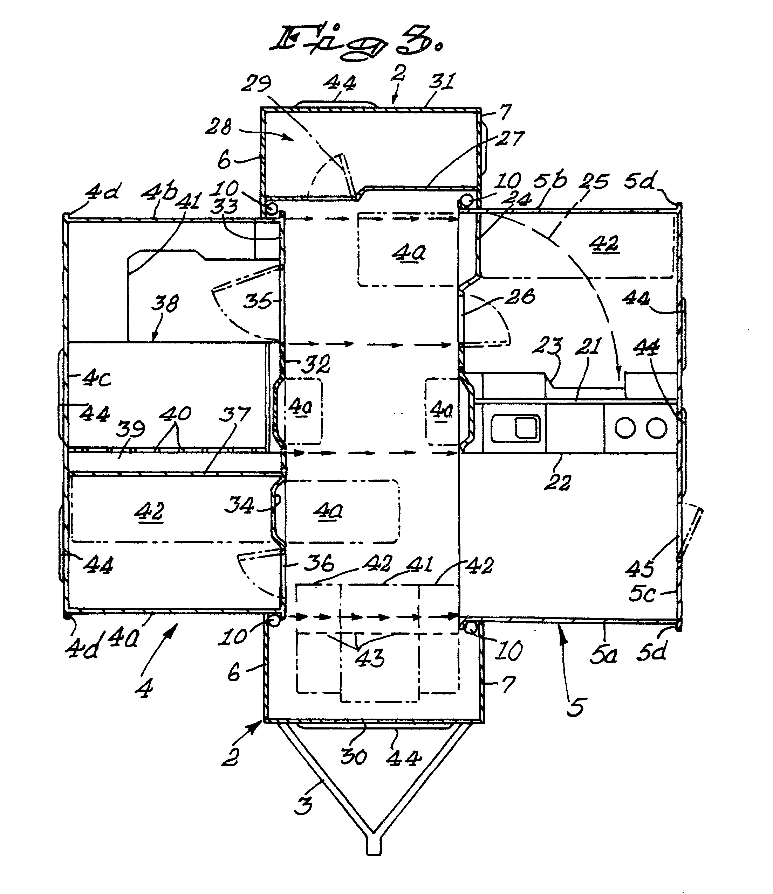

As can best be seen in Figures 2 and 3, the shell 4 is slightly smaller in overall height and width dimensions than shell 5 so that it may be received inside the shell 5 when the two shells are telescoped into the main shell 2 as indicated by the chain dotted arrows in Figure 2. It will be seen that flange 5e also seals against ridge 6b when the shell 5 is fully telescoped in.

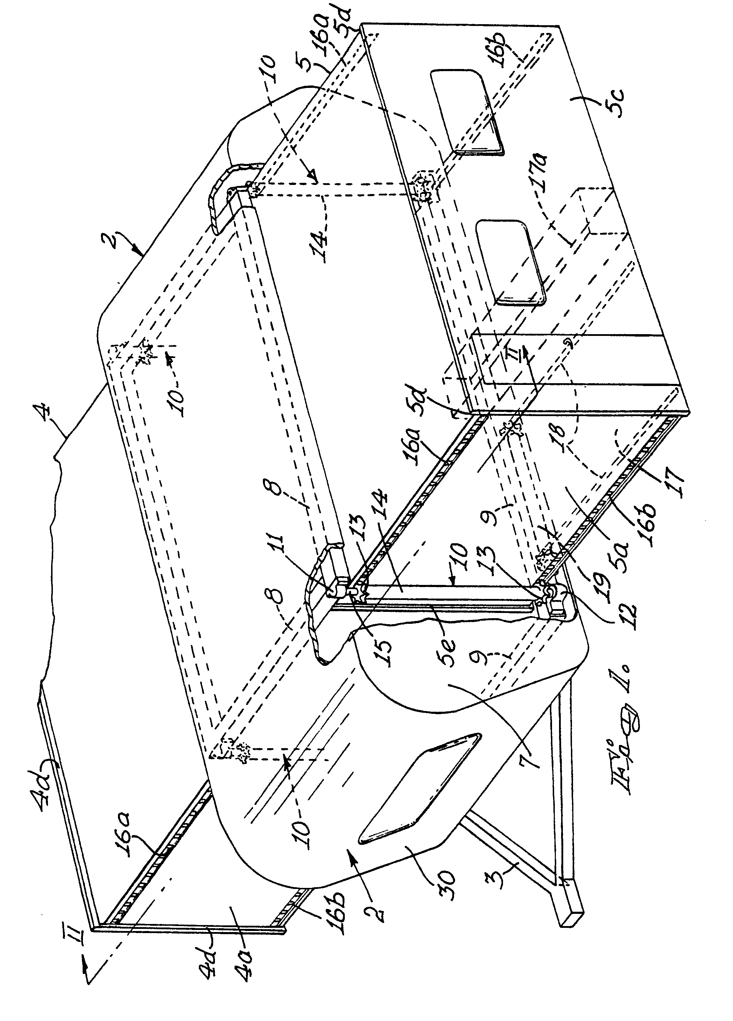

The caravan illustrated in Figure 1 has been fitted and equipped to serve as a touring caravan. Thus the floor of shell 5 is provided with a raised central section 17a which is arranged to slide over the wheel well (not shown) defined in the floor of the main shell 2.

On this raised section 17(a) a wall 21 is mounted as can be seen in Figure 3. On one side of the wall a kitchen unit 22 is fitted. A wardrobe unit 23 is provided on the other side of the wall. On the inside end of the partition constituted by the wall 21, the unit 22 and the unit 23 there is mounted a wall 24 which is hingeably connected to the partition unit to be movable between the position as shown and a position in which it overlies the wardrobe unit 23 by moving its free end along the line 25. The wall 24 includes a door 26.

The side walls 6 and 7 and end walls 30 and 31 are fixed to the main shell 2 and so is also a wall unit 27 which partitions off a toilet area 28 to which access may be had by a door 29. A further wall section 32 is also fixed to the floor and roof of the main shell 2.

The shell 4 is partially closed off at its inner end by means of wall 33 and wall 34 which are respectively provided with doors 35 and 36. A further wall 37 bisects shell 4. The central part of the floor of shell 4 is constituted by a bedboard 38 which is hingedly connected by means of a hinge 40 along an edge thereof to a support 39 extending from the wall 37.

It will be seen that door 35 leads into a main bedroom provided with wardrobes 41 and that doors 26 and 36 lead into smaller bedrooms which may be provided with removable hammocks 42.

To collapse the caravan the hammocks 42 are removed, the wall 24 is pivoted to overlie the wardrobes 23, and the bedboard 38 with its mattress is hinged upwardly to extend normally from the support 39.

The shell 5 may now be telescoped into the main shell 2 to a position in which the inner end of the partition including the kitchen unit abuts against the wall section 32. Thereupon the shell 4 may be telescoped into the shell 5 which is now located inside the shell 2. It will be seen that the opening in the floor of shell 5 which may be covered by the bedboard 38, clears on either side of the wall section 32 and the partition including the kitchen unit.

In the main shell 2 there is shown in dotted lines articles of furniture comprising seats 40, a table 41 and benches 42 for the table 41 which may be fitted in the shell 2. The seats 40 are pivotably connected to the walls to which they are fitted so that they may be folded into recesses provided in these walls.

The table 41 and benches 42 may be of any suitable foldaway type. The table 41 and benches 42 illustrated include transverse hinges 43 by which the sections thereof extending over the line of travel of the end wall 5a may be folded away before the caravan is collapsed.

It will be seen that the rotating elements 10 are located in corner zones defined between the exterior surfaces of the movable shells 4 and 5 and the interior surfaces of the main shell 2.

The rotating elements 10 are enclosed in box structures (not shown) which are provided with slits through which the peripheral zones of the sprocket wheels which engage with the chains 16a and 16b extend.

The outer walls of the caravan are provided with windows 44 and an outer door 45 is provided in wall 5c. The caravan includes a suitable locking mechanism not shown) for maintaining the shells 4 and 5 in position when the caravan is either fully collapsed or fully extended. The locking mechanism may simply be a pin which is placed through registering apertures in the relatively movable parts. Suitable corner jacks may also be provided to support the shells while the caravan is in fully extended condition.

It will be understood that a caravan as illustrated may be differently equipped to serve other purposes than that of a touring caravan. Thus the caravan may

0065398

be equipped to serve as a mobile hospital or operating theatre by providing it with the necessary operating table, beds and related equipment. All these modifications may be effected without thereby departing from the spirit of the invention.

It is also within the scope of the invention to provide other types of telescopic shell structures such as boarding tunnels, filing cabinets, prefabricated buildings and generally structures which include at least one panel structure which is mounted for movement in its own plane and fall within the scope of the appended claims.

CLAIMS:

1.    A construction comprising a support and a panel associated with the support for movement in its own plane relative to the support characterised in that the construction includes a guide arrangement including two or more gear sets, each set comprising a linear gear and a meshing circular gear, the linear gears being mounted in spaced parallel relationship to either one of the panel or support to extend in the direction of relative movement between the panel and the support, and the circular gears being mounted for rotation to the other of the panel or support to be in meshing interengagement with the linear gears and the circular gears being drivingly interconnected to restrain the linear gears to movement only in co-directional unison with one another relative to the circular gears.

2.    A shelter construction comprising a first shell and a second shell arranged for telescopic movement through an opening in a side of the first shell between a first position in which the second shell is located in the first shell and a second position in which it projects from the first shell, the second shell including a pair of opposed panels constituting end walls which lie in a plane parallel to the direction of telescopic movement and a side wall interconnecting the end walls, characterised in that the construction includes at least at one of the end walls a guide arrangement including two or more gear sets, each gear set comprising a linear gear and a circular gear, the linear gears being mounted in spaced parallel relationship to either one of the first shell or the end wall panel of the second shell to extend in the direction of telescopic movement between the shells, and the circular gears being mounted for rotation to the other of the first shell or the end wall panel of the second shell to be in meshing interengagement with the linear gears, and the circular gears being drivingly interconnected to restrain the linear gears to movement only in co-directional unison with one another relative to the circular gears.

3.    The shelter construction of claim 2 characterised in that the main shell is mounted on a wheel mounted chassis.

4.    The construction of claim 1 or 2 characterised in that the gear set comprise rack and pinion arrangements.

5.    The construction of any one of claims 1 to 3 characterised in that the linear gears are in the form of lengths of chain and circular gears in the form of sprocket wheels adapted to mesh with the chain.

6.    The construction of claim 5 characterised in that the bending axes of the chains are disposed in a plane parallel to the plane in which the panel is movable and wherein the sprocket wheels are drivingly interconnected by means of a shaft to be co-axially disposed in spaced parallel planes normal to the plane in which the panel is movable.

7.    The construction of claim 6 characterised in that the chains are mounted on a mounting strip of resilient material.

8.    The construction of claim 1 or claim 2 characterised in that the linear gear is mounted on the panel.

9.    The construction of claim 2 characterised in that both opposing end wall panels are provided with gear sets.

10.    The construction of claim 2 characterised in that the first and second shells each include a floor structure and at least two gear sets, each gear set comprising a circular gear and a linear gear, the linear gears being mounted in spaced parallel relationship to one of the floor structures to extend in the direction of movement of the shells relative to one another, and the circular gears being mounted for rotation to the other floor structure to be in meshing interengagement with the linear gears, and the circular gears being drivingly interconnected to restrain the linear gears to movement only in co-directional unison with one another relative to the circular gears.

11.    A method of mounting a panel to a support for movement of the panel in its own plane relative to the support characterised in that the method includes the steps of securing to one of the panel or support a pair of parallel spaced linear gears and rotatably mounting to the other of the panel or support a pair of drivingly interconnected circular gears to be in meshing interengagement with the linear gears to restrain the movement of the linear gear relative to the circular gears to co-directional movement in unison with one another.

12. The method of claim 11 characterised in that the support is constituted by a first shell and the panel forms part of a second shell arranged for telescopic movement through an opening in a side of the first shell.

Fig 1.

0065398

Fig 2.

0065398

Fig 3.

European Patent
Office

**EUROPEAN SEARCH REPORT**

0065398
Application number

EP 82 30 2351.0

| | DOCUMENTS CONSIDERED TO BE RELEVANT | | | CLASSIFICATION OF THE APPLICATION (Int. Cl. 3) |
|---|---|---|---|---|
| Category | Citation of document with indication, where appropriate, of relevant passages | | Relevant to claim | |
| X,Y | <u>FR - A - 1 574 680</u> (GRANGE)<br>* fig. 3, 5a, 5b * | | 1-4,<br>8-12 | B 60 P 3/34 |
| | --- | | | |
| Y | <u>US - A - 2 842 972</u> (HOUDART)<br>* fig. 1 to 9 * | | 1,2 | |
| | --- | | | |
| A | <u>FR - A - 1 211 834</u> (DEPLIREX)<br>* fig. 1 to 4 * | | 5,6 | |
| | --- | | | |
| A | <u>CH - A - 476 587</u> (WERNBORG)<br>--- | | | TECHNICAL FIELDS SEARCHED (Int.Cl. 3) |
| A | <u>US - A - 3 915 492</u> (AGNESE)<br>--- | | | B 60 P 3/00 |
| A | <u>DE - C - 822 783</u> (HOUDART)<br>---- | | | |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search<br>Berlin | Date of completion of the search<br>23-07-1982 | Examiner<br>LUDWIG |
|---|---|---|

EPO Form 1503.1  06.78